# EUROPÄISCHE PATENTSCHRIFT

(11) **EP 2 902 802 B1**
(45) Veröffentlichungstag und Bekanntmachung des Hinweises auf die Patenterteilung: **26.10.2016**
(21) Anmeldenummer: 14000369.0
(22) Anmeldetag: 31.01.2014
(51) Int. Cl.: G01S 13/87, G01S 13/91, G01S 7/40, G08G 1/01, G08G 1/04

(54) **Sensorvorrichtung**
Sensor device
Dispositif de détection

(43) Veröffentlichungstag der Anmeldung: 05.08.2015
(73) Patentinhaber: S.M.S. Smart Microwave Sensors GmbH, 38108 Braunschweig (DE)
(72) Erfinder: Mende, Ralph, 38106 Braunschweig (DE)
(74) Vertreter: Friedrich, Andreas

(56) Entgegenhaltungen:
- EP-A1- 2 482 267
- DE-A1- 19 751 004
- DE-A1-102011 100 628
- DE-A1-102011 115 323
- JP-A- 2004 147 374
- US-A1- 2002 014 971
- US-A1- 2011 007 157
- US-A1- 2013 154 870

## Beschreibung

Die Erfindung betrifft eine Sensorvorrichtung zum Positionieren über oder neben einem Verkehrsweg, die eingerichtet ist, Verkehrsteilnehmer auf einem Teil des Verkehrsweges zu erfassen, wobei die Sensorvorrichtung eine Sende- und/oder Empfangseinrichtung zum Aussenden und/oder Empfangen einer Sendestrahlung aufweist, wobei die Sensorvorrichtung wenigstens eine Bestimmungseinrichtung zum Bestimmen einer Ist-Orientierung, in der die Sensorvorrichtung angeordnet ist, aufweist, wobei die Sensorvorrichtung eine elektrische Steuerung aufweist, die Ist-Position mit einer Soll-Position und/oder die Ist-Orientierung mit einer Soll-Orientierung zu vergleichen und die Soll-Orientierung einen Soll-Elevationswinkel und einen Soll-Azimutwinkel beinhaltet und die wenigstens eine Bestimmungseinrichtung eingerichtet ist, einen Ist-Elevationswinkel und/oder einen Ist-Azimutwinkel und/oder einen Ist-Verkippungswinkel zu bestimmen.

Derartige Sensorvorrichtungen sind heute aus dem Stand der Technik seit langem bekannt und werden beispielsweise zur Verkehrsüberwachung an viel befahrenen Verkehrswegen, beispielsweise Kreuzungen, verwendet. Die Sensorvorrichtungen können aber auch zur Überwachung von Schifffahrtswegen, beispielsweise Kanälen oder Schleusen, oder zur Überwachung eines Teils eines Luftraumes, beispielsweise in der Umgebung von Windkraftanlagen eingesetzt werden. In einer üblichen Ausgestaltung der Sensorvorrichtung wird durch die Sendeeinrichtung eine Sendestrahlung, die beispielsweise aus Radarstrahlung oder Ultraschallwellen bestehen kann, ausgesandt. Von Verkehrsteilnehmern, die sich auf dem überwachten Teil des Verkehrsweges befinden, wird zumindest ein Teil dieser ausgesandten Sendestrahlung reflektiert und trifft auf die Empfangseinrichtung der Sensorvorrichtung. Dadurch kann ein Teil der reflektierten Sendestrahlung empfangen werden, sodass auf die Position und die Geschwindigkeit der Verkehrsteilnehmers, von dem die ausgesandte Sendestrahlung reflektiert wurde, geschlossen werden kann.

Um beispielsweise Straßenkreuzungen gegebenenfalls mit mehreren Fahrspuren für jede Richtung in optimaler Weise überwachen zu können, sind in vielen Fällen mehrere dieser herkömmlichen Sensorvorrichtungen nötig. Damit möglichst wenige Sensorvorrichtungen verwendet werden müssen, werden die optimalen Soll-Positionen und Soll-Orientierungen dieser Sensorvorrichtungen zuvor beispielsweise durch ein dreidimensionales Modell des zu überwachenden Verkehrsweges ermittelt. Sofern die Sensorvorrichtung später folglich von einem Installateur in der Soll-Position und der Soll-Orientierung positioniert wird, wird durch die Sensorvorrichtung der ihr zugewiesene Teil des Verkehrsweges in gewünschter Weise überwacht und die auf diesem Teil des Verkehrsweges befindlichen Verkehrsteilnehmer werden erfasst.

Die Sensorvorrichtung wird in ihrer Soll-Position über oder neben dem Verkehrsweg beispielsweise an einem Ampel- oder Verkehrszeichenmast positioniert, wozu nicht selten der Verkehrsweg zumindest teilweise für den Verkehr gesperrt werden muss. Es ist auch bekannt, die Sensorvorrichtung an gespannten Kabeln beispielsweise nahezu zentral über einer Kreuzung zweier Verkehrsstraßen zu positionieren. Kommt es bei der Positionierung und Anordnung der Sensorvorrichtungen zu Abweichungen von der Soll-Position und/oder der Soll-Orientierung hat dies gravierende Auswirkungen auf die Funktionsfähigkeit der Sensorvorrichtung, da beispielsweise Verkehrsteilnehmer zu spät in den Erfassungsbereich der Sensorvorrichtung eintreten oder zu früh aus diesem Bereich austreten. Bei einer Abweichung einer Ist-Orientierung von der Soll-Orientierung ist es zudem möglich, dass nicht der gewünschte Teil des Verkehrsweges durch die Sensorvorrichtung überwacht wird, sodass gegebenenfalls nicht alle Verkehrsteilnehmer erfasst werden können. Dieser Positions- oder Orientierungsfehler ist jedoch erst erkennbar, nachdem die Ist-Orientierung und/oder die Ist-Position in einem oftmals per Hand durchgeführten Verfahren bestimmt wurde.

Aus der DE 10 2011 115 323 A1, der US 2013/0154870 A1, der EP 2 482 267 A1 und der DE 197 51 004 A1 sind jeweils Systeme bekannt, bei denen Sensoren, beispielsweise Radarsensoren, in einem Kraftfahrzeug angeordnet sind, um die Umgebung des Kraftfahrzeugs zu überwachen. Die so ermittelten Informationen können beispielsweise einem Navigationssystem zur Verfügung gestellt werden oder verwendet werden, um Fahrzeugbedrohungen zu identifizieren und diese auf einer Windschutzscheibe des Kraftfahrzeugs anzuzeigen. Die DE 10 2011 100 628 A1 befasst sich mit einem Verfahren zur Bestimmung eines Kameraparameters. Dabei werden bekannte Kalibrationsstrukturen in einer bekannten Position und Orientierung von der Kamera aufgenommen, so dass anhand der bekannten Abmessungen und Positionen der Kalibrationsstruktur auf eine Ausrichtung der Kamera geschlossen werden kann.

Die US 2011/007157 A1 offenbart eine Sensorvorrichtung zum Positionieren neben einem Verkehrsweg, die eingerichtet ist, Verkehrsteilnehmer auf einem Teil eines Verkehrswegs zu erfassen.

Der Erfindung liegt daher die Aufgabe zugrunde, eine Sensorvorrichtung so weiter zu entwickeln, dass die korrekte Anordnung der Sensorvorrichtung möglichst einfach, schnell und verlässlich an einer geeigneten Position möglich ist.

Die Erfindung löst die gestellte Aufgabe durch eine Sensorvorrichtung gemäß dem Oberbegriff des Anspruchs 1, die sich dadurch auszeichnet, dass in einem elektronischen Datenspeicher Informationen über verschiedene Teilbereiche, insbesondere Fahrspuren, des Teils des Verkehrsweges oder Erwartungs-Trajektorien gespeichert sind, von denen erwartet wird, dass sich zumindest ein Teil der Verkehrsteilnehmer entlang dieser ErwartungsTrajektorien bewegt und dass die elektrische Steuerung eingerichtet ist, aus Daten von Mehrfach zu unterschiedlichen Zeitpunkten erfassten Verkehrsteilnehmern eine Ist-Trajektorie zu bestimmen, diese mit den Erwartungs-Trajektorien oder mit den Informationen über verschiedene Teilbereiche, insbesondere Fahrspuren, des Teils des Verkehrsweges zu vergleichen und aus einem Ergebnis dieses Vergleiches eine Abweichung des Ist-Elevationswinkels vom Soll-Elevationswinkel und/oder eine Abweichung des Ist-Azimutwinkels vom Soll-Azimutwinkel zu bestimmen.

In einer vorteilhaften Ausgestaltung weist die wenigstens eine Bestimmungseinrichtung ein GPS-Modul zum Bestimmen der Ist-Position auf. Natürlich können auch Module anderer satellitengestützter Positionsbestimmungssysteme oder anderer Systeme zum Bestimmen der Ist-Position verwendet werden. So ist beispielsweise auch eine Bestimmung der Ist-Position über ein Mobilfunknetz möglich. Die Verwendung eines GPS-Moduls weist jedoch den Vorteil auf, dass die Ist-Position mit einer hohen Genauigkeit, beispielsweise mit einer Abweichung von nur einigen Zentimetern, bestimmt werden kann.

Vorzugsweise weist die Sensoreinrichtung eine Bereitstellungseinrichtung auf, um die Ist-Position und/oder die Ist-Orientierung für eine weitere Verarbeitung bereitzustellen. Eine derartige Bereitstellungseinrichtung kann beispielsweise ein Display sein, auf dem die Ist-Position und/oder die Ist-Orientierung angezeigt und somit für einen Techniker, der beispielsweise die Sensorvorrichtung montiert, erkennbar und weiter verarbeitbar ist. Der Techniker oder Monteur kann die bestimmte Ist-Position und/oder Ist-Orientierung beispielsweise mit Soll-Daten vergleichen und gegebenenfalls Änderungen an der Ausrichtung und/oder der Position der Sensorvorrichtung vornehmen.

Die Bereitstellungseinrichtung kann jedoch beispielsweise in Form einer Kommunikationseinrichtung vorliegen, die beispielsweise drahtlos oder kabelgebunden die Daten an eine Weiterverarbeitungseinrichtung übermittelt. Dies kann über Funk, Mobilfunk oder WLAN oder andere Kommunikationskanäle geschehen. Die Weiterverarbeitungseinrichtung ist beispielsweise eine elektronische Datenverarbeitungseinrichtung, beispielsweise Computer, der die Daten über die Ist-Position und/oder Ist-Orientierung empfängt und gegebenenfalls weiterverarbeitet.

Erfindungsgemäß verfügt die Sensorvorrichtung über eine elektrische Steuerung, die eingerichtet ist, die Ist-Position mit einer Soll-Position und/oder die Ist-Orientierung mit einer Soll-Orientierung zu vergleichen. Die elektrische Steuerung ist dabei beispielsweise als Mikroprozessor zur elektronischen Datenverarbeitung ausgebildet.

Als besonders vorteilhaft hat sich herausgestellt, wenn die elektrische Steuerung eingerichtet ist, die Soll-Position und/oder die Soll-Orientierung einem elektrischen Datenspeicher zu entnehmen. Dieser ist vorteilhafter Weise Teil der Sensorvorrichtung. Alternativ oder zusätzlich dazu kann auch ein externer elektronischer Datenspeicher vorhanden sein, auf den die elektrische Steuerung beispielsweise drahtlose Kommunikationskanäle, beispielsweise WLAN, Bluetooth oder Funk, Zugriff hat.

In dem elektronischen Datenspeicher der Sensorvorrichtung werden folglich die Soll-Position und/oder die Soll-Orientierung gespeichert. Durch die Bestimmungseinrichtung ist die Sensorvorrichtung in der Lage, nach der Positionierung in einer Ist-Position und einer Ist-Orientierung zumindest eine dieser Größen zu bestimmen und über die elektrische Steuerung mit der gespeicherten Soll-Position und/oder der Soll-Orientierung zu vergleichen. Fehler und Abweichungen in der Positionierung der Sensorvorrichtung sind somit kurzfristig und schnell und noch am Installations- und Montageort erkennbar und können schnell und einfach korrigiert werden. Ein nochmaliges Sperren des Verkehrsweges oder eine nochmalige Anfahrt eines Installateurs oder Monteurs ist nicht mehr nötig.

In einer besonders vorteilhaften Ausgestaltung der Sensorvorrichtung werden natürlich möglichst viele Daten der Soll-Position und der Soll-Orientierung in dem elektronischen Datenspeicher gespeichert, die anschließend mit besonders vielen bestimmten Daten der Ist-Position und der Ist-Orientierung verglichen werden können.

Der elektronische Datenspeicher kann dabei ein in die Sensorvorrichtung integriertes Bauteil oder ein separierbares Bauteil, beispielsweise in Form eines USB-Sticks, sein, auf dem in diesem Fall beispielsweise Soll-Positionen und/oder Soll-Orientierungen einer oder mehrerer Sensorvorrichtungen gespeichert sein können. So ist es beispielsweise möglich, alle Soll-Positionen und/oder Soll-Orientierungen der beispielsweise für eine Kreuzung zu verwendenden Sensorvorrichtungen auf einem einzigen externen elektronischen Datenspeicher zu speichern. Dieser wird bei der Montage mit dem Rest der jeweiligen Sensorvorrichtung über eine entsprechende Schnittstelle, beispielsweise einen USB-Port, verbunden und wird in diesem Moment Teil der jeweiligen Sensorvorrichtung.

Natürlich sind auch sämtliche anderen Arten eines elektronischen Datenspeichers denkbar. So kann es beispielsweise von Vorteil sein, wenn die Sensorvorrichtung auf einen elektronischen Datenspeicher Zugriff hat, der sich beispielsweise an einem zentralen Ort befindet. Der Zugriff auf die in dem elektronischen Datenspeicher hinterlegten Daten kann dann beispielsweise über eine Funkverbindung oder ein Mobilfunknetz geschehen, sodass in der eigentlichen Sensorvorrichtung, die am jeweiligen Verkehrsweg montiert wird, kein körperlich vorhandener elektronischer Datenspeicher angeordnet ist, sondern die Sensorvorrichtung nur über entsprechende Kommunikationsmittel Zugriff auf einen derartigen Datenspeicher hat. Auch dies entspricht im Sinne der vorliegenden Erfindung einer Sensorvorrichtung, die über einen elektronischen Datenspeicher im Sinne der Erfindung verfügt.

Erfindungsgemäß beinhaltet die Soll-Orientierung einen Soll-Elevationswinkel und einen Soll-Azimutwinkel und die wenigstens eine Bestimmungseinrichtung ist eingerichtet, einen Ist-Elevationswinkel und/oder einen Ist-Azimutwinkel und/oder einen Ist-Verkippungswinkel zu bestimmen. Der Elevationswinkel ist dabei ein Winkel, der die Neigung des Sensors beispielsweise in einer X-Z-Ebene, die folglich vertikal verläuft, beschreibt. Zur Bestimmung des Ist-Elevationswinkel kann daher beispielsweise ein Neigungssensor verwendet werden, der die Neigung des Sensors beispielsweise relativ zu einer Horizontalen misst. Der so ermittelte Ist-Elevationswinkel wird in der elektrischen Steuerung mit einem in dem elektronischen Datenspeicher hinterlegten Soll-Elevationswinkel verglichen.

Unter einem Azimutwinkel wird ein Winkel der Orientierung der Sensorvorrichtung beispielsweise in der X-Y-Ebene, die folglich horizontal verläuft, verstanden. Dieser kann beispielsweise mit einem Kompass und/oder ein Magnetometer relativ zur Nord-Richtung ermittelt werden.

Der Ist-Verkippungswinkel beschreibt eine Verkippung des Sensors um die Längsachse der jeweiligen Strahlkeule. Insbesondere für den Fall, dass die Sendestrahlkeule und/oder die Empfangsstrahlkeule nicht rotationssymmetrisch um ihre Längsachse ausgebildet sind, ist dieser Verkippungswinkel von Interesse, um sicherzustellen, dass die nicht rotationssymmetrische Strahlkeule des zu überwachenden Bereich des Verkehrsweges in möglichst optimaler Wiese trifft und ausleuchtet bzw. die nicht rotationssymmetrisch ausgebildete Empfangskeule die reflektierte Strahlung in optimaler Weise auffangen kann. Der Wert des Ist-Verkippungswinkels wird folglich mit einem SollVerkippungswinkel verglichen, der in aller Regel 0° ist. In besonderen Situationen kann es jedoch auch sinnvoll sein, einen von 0° verschiedenen Soll-Verkippungswinkel vorzusehen. Der Vergleich des Ist-Verkippungswinkels mit dem Soll-Verkippungswinkel verläuft analog zum Vergleich der anderen Ist-Winkeln mit den entsprechenden Soll-Winkeln.

Natürlich sind auch andere Winkel relativ zu anderen Referenzebenen oder Geraden denkbar, so lange durch die drei unhängigen Winkel die Orientierung der Sensorvorrichtung eindeutig beschrieben werden kann.

In einer bevorzugten Ausgestaltung verfügt die wenigstens eine Bestimmungseinrichtung über einen Kompass und/oder ein Magnetometer zum Bestimmen des Ist-Azimutwinkels. Dieser so ermittelte Ist-Azimutwinkel kann dann über die elektrische Steuerung mit einem in den elektronischen Datenspeicher hinterlegten Soll-Azimutwinkel verglichen werden.

In einer besonders bevorzugten Ausgestaltung sind in dem elektronischen Datenspeicher der Sensorvorrichtung zusätzlich zu den bereits genannten Informationen Informationen über verschiedene Teilbereiche, insbesondere Fahrspuren, des Teils des Verkehrsweges oder Erwartungs-Trajektorien gespeichert, von denen erwartet wird, dass sich zumindest ein Teil der Verkehrsteilnehmer zumindest grob entlang dieser Erwartungs-Trajektorien bewegt. Natürlich können sowohl Informationen über verschiedene Teilbereich, insbesondere Fahrspuren, als auch Erwartungs-Trajektorien gespeichert werden.

Zur Bestimmung der Soll-Position und/oder der Soll-Orientierung wird herkömmlicher weise ein dreidimensionales Modell des zu überwachenden Verkehrsweges, beispielsweise einer Straßenkreuzung, erstellt und die optimale Soll-Position und/oder optimale Soll-Orientierung wird anhand dieses Modells bestimmt. Werden nun Informationen beispielsweise über den Verlauf der Fahrspuren relativ zur Soll-Position und/oder Soll-Orientierung im elektronischen Datenspeicher hinterlegt, können Verkehrsteilnehmer, deren Trajektorie im Raum deutlich von dem Verlauf der hinterlegten Fahrspuren abweicht, erkannt und beispielsweise deren Fortbewegung auf dem zu überwachenden Teil des Verkehrsweges aufgezeichnet werden. Hierzu kann beispielsweise eine separate optische Kamera vorhanden sein, die im Bedarfsfall aktiviert werden kann.

Zusätzlich oder alternativ zu diesen Informationen über Fahrspuren oder sonstige Teilbereiche des zu überwachenden Verkehrsweges können auch Erwartungs-Trajektorien im elektronischen Datenspeicher hinterlegt werden. Unter einer Erwartungs-Trajektorie wird dabei die von zumindest einem Teil der Verkehrsteilnehmer erwartete Bewegung verstanden, die beispielsweise in parametrisierter Form im elektronischen Datenspeicher hinterlegt wird. Diese Erwartungs-Trajektorien entsprechen in der Regel einer Bewegung der Verkehrsteilnehmer entlang beispielsweise vorhandener Fahrspuren. Auch hier ist es möglich, auffällige Verkehrsteilnehmer, deren tatsächliche Trajektorie im Raum stark von Erwartungs-Trajektorien abweicht, zu identifizieren. Dabei wird herkömmlicherweise erwartet, dass sich ein Verkehrsteilnehmer zumindest über einen großen Zeitraum hinweg in einem relativ engen Bereich um die Erwartungs-Trajektorie herumbewegt, wenn er beispielsweise einer Fahrspur des Verkehrsweges folgt. Situationen wie beispielsweise das Wechseln von Fahrspuren können auf diese Weise erkannt und in verschiedene Szenarien unterteilt werden. Eine Erwartungs-Trajektorie kann auch in Form eines Bereiches definiert werden, innerhalb deren sich der Verkehrsteilnehmer voraussichtlich bewegen wird. Dieser Bereich kann beispielsweise deckungsgleich mit einer oder mehreren Fahrspuren des Verkehrsweges sein.

Erfindungsgemäß ist die elektrische Steuerung eingerichtet, aus den Daten von mehrfach zu unterschiedlichen Zeitpunkten erfassten Verkehrsteilnehmern eine Ist-Trajektorie zu bestimmen, diese mit den Erwartungs-Trajektorien oder den Informationen über verschiedene Teilbereiche, insbesondere Fahrspuren, des Teils des Verkehrsweges zu vergleichen und aus dem Ergebnis dieses Vergleiches eine Abweichung des Ist-Elevationswinkels vom Soll-Elevationswinkel und/oder eine Abweichung des Ist-Azimutwinkels vom Soll-Azimutwinkel zu bestimmen.

Durch eine hier beschriebene Sensorvorrichtung werden Verkehrsteilnehmer in der Regel mehrfach erfasst, während sie sich auf den zu überwachenden Teil des Verkehrsweges bewegen. Man erhält somit zu unterschiedlichen Zeitpunkten unterschiedliche Aufenthaltsorte einzelner Verkehrsteilnehmer, die sich durch die elektrische Steuerung zu einer Ist-Trajektorie, entlang derer sich der jeweilige Verkehrsteilnehmer tatsächlich bewegt, zusammenfassen lassen. Diese Ist-Trajektorien können nun beispielsweise mit den zusätzlichen Informationen über den Teil des Verkehrsweges, beispielsweise Fahrspuren, verglichen werden. Stellt sich dabei heraus, dass sich ein Großteil der erfassten Verkehrsteilnehmer sich beispielsweise nicht im Wesentlichen parallel zu den hinterlegten Fahrspuren bewegt, sondern einen im großen und ganzen konstanten Winkel zu diesen Fahrspuren einhält, kann daraus eine Information über den Ist-Azimutwinkel erhalten werden. Sofern sich die Sensorvorrichtung in ihrer Soll-Position und ihrer Soll-Orientierung befindet, müssen die erfassten Verkehrsteilnehmer sich entlang der Fahrspuren oder der Erwartungs-Trajektorien bewegen. Eine von den Fahrspuren oder Erwartungs-Trajektorie abweichende Bewegung der Verkehrsteilnehmer beispielsweise in der gleichen Ebene wie die Fahrspuren oder Erwartungstrajektorien, jedoch unter einem nahezu konstanten Winkel zu diesem, wobei der Winkel ungleich 0° ist, ist ein Hinweis auf eine Abweichung des Ist-Azimutwinkels zum Soll-Azimutwinkel.

Führt der Vergleich der Ist-Trajektorien mit den hinterlegten Fahrspuren oder den Erwartungs-Trajektorien dazu, dass zwischen der Ist-Trajektorie und den hinterlegten Daten ein mehr oder weniger konstanter Winkel erkannt wird, der beispielsweise in einer X-Z-Ebene liegt, ist dies ein starker Hinweis auf eine Abweichung des Ist-Elevationswinkels vom Soll-Elevationswinkel.

Es ist folglich möglich, allein aus dem Vergleich der errechneten Ist-Trajektorien mit den hinterlegten Informationen über den Verkehrsweg oder die Erwartungs-Trajektorien Aussagen über einen Vergleich der Ist-Orientierung mit der Soll-Orientierung der Sensorvorrichtung zu treffen, ohne dass dafür separate Bauteile in Form von Sensoren, Kompass oder ähnlichen Geräten vorhanden sein müssten. Ein Teil der elektrischen Steuerung wird bei dieser Ausgestaltung zur Bestimmungseinrichtung, sodass die Anzahl der verwendeten Bauteile bei dieser Ausgestaltung der Sensorvorrichtung stark reduziert wird.

Wird eine Abweichung der Ist-Position von der Soll-Position und/oder eine Abweichung der Ist-Orientierung von der Soll-Orientierung, festgestellt, muss nicht zwangsweise die Ist-Position und/oder die Ist-Orientierung der Sensorvorrichtung geändert werden. Oftmals ist beispielsweise ein Öffnungswinkel der von der Sende- und Empfangseinrichtung ausgesandten Sendestrahlung größer als der zur Abdeckung des gewünschten Bereichs benötigte Öffnungswinkel. In diesem Fäll ist eine Änderung der Ist-Position und/oder der Ist-Orientierung nicht nötig, da der gewünschte Bereich des Verkehrsweges gegebenenfalls nicht durch den erwarteten zentralen Bereich des Öffnungswinkel der Sende- und Empfangseinrichtung, sondern beispielsweise von einem gegenüber diesem Bereich verschobenen Bereich des Öffnungswinkels abgedeckt wird. Eine beispielhafte Sende- und Empfangseinrichtung hat einen Öffnungswinkel, der sich von -20° bis +20°um eine Hauptsendeachse erstreckt. Dieser kann beispielsweise kegelförmig und damit rotationssymmetrisch um diese Längsachse ausgebildet sein. Wird eine derartige Sende- und Empfangseinrichtung in der Soll-Position und der Soll-Orientierung der Sensorvorrichtung angeordnet, hat dies beispielsweise zur Folge, die einem Bereich von -15° bis +15° um die zentrale Sendeachse herum ausgesandte Sendestrahlung den zu überwachenden Bereich des Verkehrsweges abdeckt. Wird die Sende- und Empfangseinrichtung jedoch beispielsweise um einige Grad versetzt zur Soll-Orientierung, insbesondere mit einem Versatz-Azimutwinkel angeordnet, muss nicht zwangsweise diese Ist-Orientierung korrigiert werden. Vielmehr kann auch der zur Überdeckung und Überwachung des gewünschten Bereichs des Verkehrsweges benötigte Sendebereich verschoben werden, sodass nicht mehr die Sendestrahlung, die in einem Winkelbereich von -15° bis +15° um die zentrale Sendeachse sondern beispielsweise in einem Bereich von -10° bis +20° zur Überwachung des Verkehrsweges verwendet wird. Eine derartige Änderung ist auf rein elektronischem Weg und damit als Software-Lösung denkbar. Dabei wird weder die Form der Sendestrahlkeule noch der Empfangsstrahlkeule geändert, sondern lediglich ein anderer, verschobener Winkelbereich zur Auswertung verwandelt.

Es ist auch möglich, nach der Feststellung der Abweichung der Ist-Position und von der Soll-Position und/oder der Ist-Orientierung von der SollOrientierung die im elektronischen Datenspeicher hinterlegten Daten über Fahrspuren oder Erwartungs-Trajektorien so zu ändern, dass sie mit den tatsächlichen Gegebenheiten wieder übereinstimmen. Auch dies kann im Rahmen einer Softwareanpassung auf elektronischem Wege erfolgen.

Eine Sende- und Empfangseinrichtung verfügt oftmals über strahlformende Bauteile, sodass beispielsweise durch eine Änderung der Ansteuerung dieser Bauteile der Sendekegel und/oder Empfangskegel der von der Sende- und Empfangseinrichtung ausgesandten Sendestrahlung verändert und geformt werden kann. Die Veränderung der Empfangsstrahlkeule kann auch ohne zusätzliche Bauteile erfolgen, indem die empfangenen Signale mathematischen Operationen unterzogen werden. Insbesondere können Phasenverschiebungen auf numerischem Wege erzeugt und verwendet werden. Auch durch diese Art der Strahlformung kann eine Korrektur von Abweichungen der Ist-Position von der Sollposition und/oder der Ist-Orientierung von der Soll-Orientierung ausgeglichen werden.

Vorzugsweise ist die elektrische Steuerung eingerichtet, eine Abweichung der Ist-Position von der Soll-Position und/oder eine Abweichung der Ist-Orientierung von der Soll-Orientierung an eine Ausgabeeinrichtung, insbesondere ein Display, auszugeben. Auf diese Weise ist es für den Monteur und Installateur besonders einfach möglich, die benötigten Korrekturen bei der Ist-Position und/oder Ist-Orientierung zu erkennen und gegebenenfalls vorzunehmen. Natürlich können die von der elektrischen Steuerung ausgegebenen Informationen auch beispielsweise zu Dokumentationszwecken gespeichert werden.

Vorzugsweise verfügt die Sensorvorrichtung über wenigstens einen Beschleunigungssensor, mit dem eine Beschleunigung der Sensorvorrichtung in wenigstens einer Raumrichtung, vorzugsweise in zwei oder drei voneinander unabhängigen Raumrichtungen, messbar ist. Derartige Beschleunigungen können beispielsweise dann auftreten, wenn die Sensorvorrichtung an einem Mast angeordnet ist, der beispielsweise starkem Wind augesetzt wird. Dabei kommt es zu Schwankungen des Masts, die sich naturgemäß auf die an ihm befestigte Sensoreinrichtung übertragen und so das Messergebnis der Sensorvorrichtung beeinträchtigen. Wie bereits dargelegt sendet die Sensorvorrichtung eine Sendestrahlung aus, die von dem zu erfassenden Verkehrsteilnehmer reflektiert und von der Sensorvorrichtung wieder aufgefangen wird. Um den Abstand des Verkehrsteilnehmers von der Sensorvorrichtung bestimmen zu können, ist es notwendig, die Ausbreitungsgeschwindigkeit der Sendestrahlung zu kennen und die Zeitspanne zwischen dem Aussenden der Sendestrahlung und dem Empfangen der reflektierten Sendestrahlung zu messen. Dies setzt natürlich voraus, dass sich die Position der Sensorvorrichtung nicht oder lediglich in vernachlässigbarer Weise ändert. Zudem setzt es voraus, sich die Sensorvorrichtung beispielsweise relativ zum Verkehrsweg nicht oder nur in vernachlässigbarer Weise bewegt, beispielsweise dem Dopplereffekt vorzubeugen, der insbesondere bei der Verwendung von Ultraschallwellen als Sendestrahlung durchaus nennenswerte Effekte hervorrufen kann. Sofern folglich durch den wenigstens einen Beschleunigungssensor eine Beschleunigung in wenigstens einer Raumrichtung ermittelt wird, die oberhalb eines vorbestimmten Grenzwertes liegt, kann dies beispielsweise bei der Auswertung der Messdaten berücksichtigt werden. Alternativ oder zusätzlich dazu kann eine derart große Beschleunigung dazu führen, dass die elektrische Steuerung die Sensorvorrichtung abschaltet oder aufgefangene Sendestrahlung nicht mehr auswertet.

Mit Hilfe der beigefügten Figuren wird nachfolgend ein Ausführungsbeispiel der vorliegenden Erfindung näher erläutert. Es zeigt
- Figur 1: - die schematische Darstellung einer Kreuzung mit einer Sensorvorrichtung,
- Figur 2: - die schematische Darstellung einer Abweichung in Azimutwinkel und
- Figur 3 a und b: - die schematische Darstellung eines korrekten (Figur 3a) und eines fehlerhaften (Figur 3b) Elevationswinkels.

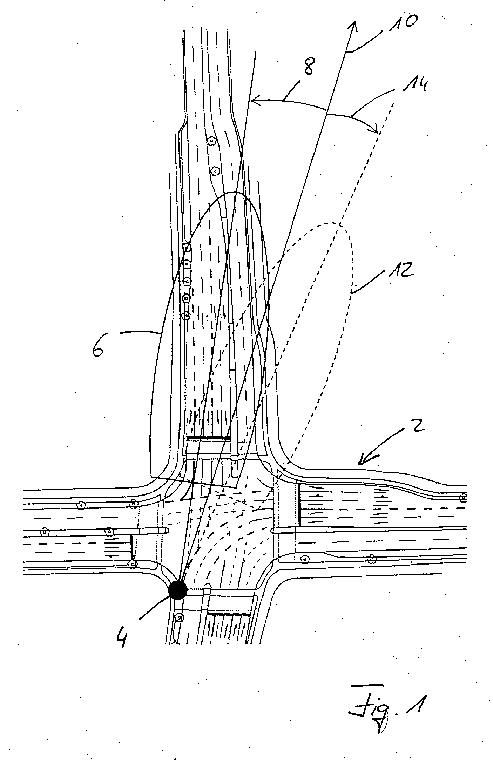

Figur 1 zeigt eine schematische Draufsicht auf eine Kreuzung 2, an der eine Sensorvorrichtung 4 in einer Ist-Position angeordnet ist. Bei der in Figur 1 dargestellten Positionierung befindet sich die Sensorvorrichtung 4 in einer Ist-Position, die mit der Soll-Position identisch ist. Mit einer durchgezogenen Linie ist ein Soll-Erfassungsbereich 6 dargestellt, der um einen Soll-Azimutwinkel 8 von einer Nordrichtung 10 abweicht. Natürlich kann der Soll-Azimutwinkel 8 auch bezüglich jeder anderen Vorzugsrichtung bestimmt werden.

Man erkennt in Figur 1, dass der Soll-Erfassungsbereich 6 einen Teil der Kreuzung 2 in nahezu optimaler Weise abdeckt. Dieser Soll-Erfassungsbereich 6 ist zuvor beispielsweise unter Verwendung eines dreidimensionalen Modelles bestimmt worden.

Durch gestrichelte Linien ist hingegen ein Ist-Erfassungsbereich 12 dargestellt, der um einen Ist-Azimutwinkel 14 von der Nordrichtung 10 abweicht.

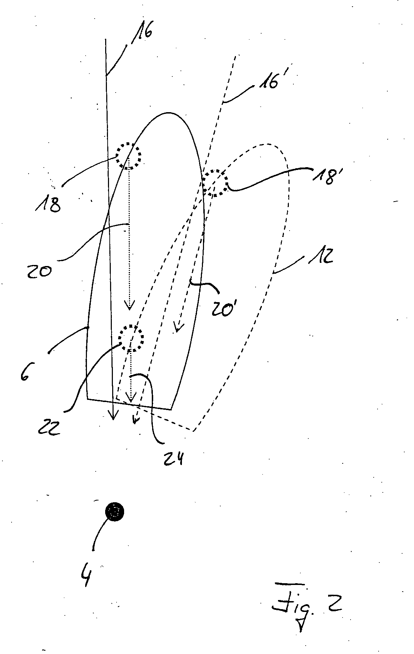

Man erkennt bereits in Figur 1, dass der Ist-Erfassungsbereich 12 einen deutlich vom Soll-Erfassungsbereich 6 unterschiedlichen Bereich der Kreuzung 2 abdeckt. So werden beispielsweise Fahrzeuge, die auf der in Figur 1 von oben nach unten verlaufenden Straße in dieser Richtung fahren, erst sehr spät in den Ist-Erfassungsbereich 12 der Sensorvorrichtung 4 eintreten, während sie im Soll-Erfassungsbereich 6 deutlich früher zu erkennen wären. Figur 2 zeigt die gleiche Situation wie Figur 1, wobei zur besseren Übersichtlichkeit die Kreuzung 2 nicht dargestellt sind. Auch in Figur 2 ist folglich die Sensorvorrichtung 4, der Soll-Erfassungsbereich 6 und der IstErfassungsbereich 12 dargestellt. Während in Figur 1 jedoch der Soll-Azimutwinkel eingezeichnet und bekannt ist, zeigt Figur 2 eine Sensorvorrichtung 4, in deren elektronischen Datenspeicher der Soll-Azimutwinkel 8 nicht enthalten sein muss. Vielmehr sind im elektronischen Datenspeicher weitere Informationen über die zu überwachende Kreuzung 2 gespeichert. Diese umfassen beispielsweise eine Erwartungs-Trajektorie 16. Diese entspricht der erwarteten Fahrtrichtung oder auch dem erwarteten Weg der meisten Verkehrsteilnehmer, die in den Soll-Erfassungsbereich 6 eindringen. Die Erwartungs-Trajektorie 16 entspricht in ihrer Richtung der Richtung der Fahrspuren der in Figur 1 dargestellten Kreuzung 2.

Ein Verkehrsteilnehmer, beispielsweise ein Kraftfahrzeug, das auf einer der in Figur 1 dargestellten Fahrspuren auf der in Figur 1 von oben nach unten verlaufenden Straße auf der rechten Straßenseite fährt, tritt bei einem Erwartungseintrittspunkt 18, der durch einen gestrichelten Kreis dargestellt ist, in den Soll-Erfassungsbereich 6 ein. Er bewegt sich dann entlang der Fahrspur-Trajektorie 20, die beispielsweise ebenfalls im elektronischen Datenspeicher beispielsweise im parametrisierter Form hinterlegt worden sein kann. Alternativ oder zusätzlich dazu handelt es sich bei der Fahrspur-Trajektorie 20 um eine Ist-Trajektorie, die von der Sensorvorrichtung 4 und der darin enthaltenden elektronischen Steuerung aus unterschiedlichen Messdaten eines Verkehrsteilnehmers errechnet wurde. Man erkennt, dass die Fahrspur-Trajektorie 20 parallel zur Erwartungs-Trajektorie 16 verläuft.

Wird die Sensorvorrichtung 4 zwar in der Soll-Position, nicht jedoch in der Soll-Orientierung montiert, führt dies zu einer bereits in Figur 1 dargestellten Abweichung des Ist-Erfassungsbereiches 12 vom Soll-Erfassungsbereich 6. Wie in Figur 1 liegt auch bei der in Figur 2 dargestellten Situation eine Abweichung im Azimutwinkel vor. Dies hat nun eine ganze Reihe unterschiedlicher Effekte. Zum einen tritt ein Kraftfahrzeug, das sich entlang der in Figur 1 dargestellten Fahrspuren von oben nach unten auf der rechten Straßenseite bewegt, deutlich später in den Ist-Erfassungsbereich 12 ein. Dies geschieht bei einem Ist-Eintrittspunkt 22. Die Erwartungs-Trajektorie 16' und der Erwartungs-Eintrittspunkt 18' sind genauso wie die Fahrspur-Trajektorie 20' als zusätzliche Informationen über den zu überwachenden Bereich der Kreuzung 2 in dem elektronischen Datenspeicher hinterlegt. Diese weisen folglich die gleiche Abweichung im Azimutwinkel auf, wie der Ist-Erfassungsbereich 12. Ein Kraftfahrzeug oder ein anderer Verkehrsteilnehmer, der sich nun auf der bereits genannten Fahrspur bewegt, tritt nun wie bereits dargelegt beim Ist-Eintrittspunkt 22 in den Ist-Erfassungsbereich 12 ein und bewegt sich darin entlang einer Ist-Trajektorie 24. Auch diese verläuft geradlinig, ist jedoch kürzer als aus dem im elektronischen Datenspeicher hinterlegten Zusatzinformationen über die Kreuzung 2 erwartet und verläuft nicht parallel zur Erwartungs-Trajektorie 16' bzw. zur Fahrspur-Trajektorie 20'. Zwischen der Fahrspur-Trajektorie 20' und der Erwartungs-Trajektorie 16' auf der einen Seite und der Ist-Tajektorie 24 auf der anderen Seite ist ein Winkel eingeschlossen, der genau der Abweichung zwischen dem Ist-Azimutwinkel 14 und dem Soll-Azimutwinkel 8 entspricht. Durch die Feststellung der Ist-Trajektorie 24 und Mittelung entsprechender Trajektorien über eine Vielzahl von erfassten Verkehrsteilnehmern lässt sich folglich die Differenz zwischen Ist-Azimutwinkel 14 und Soll-Azimutwinkel 8 bestimmen und, da der Soll-Azimutwinkel 8 bekannt ist, lässt sich auch der Ist-Azimutwinkel 14 errechnen.

Die Sensorvorrichtung 4 kann dann beispielsweise auf einer nicht dargestellten Anzeigevorrichtung, beispielsweise einem Display, eine geeignete Korrektur der Ist-Orientierung der Sensorvorrichtung 4 vorschlagen.

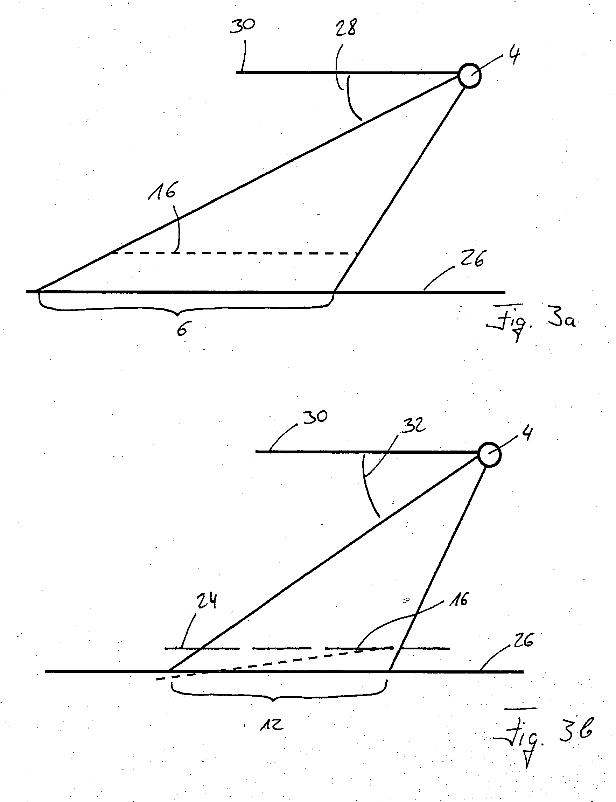

In Figur 3a ist eine stark vereinfachte Darstellung der Sensorvorrichtung 4 gezeigt, die sich in ihrer Soll-Position und der Soll-Orientierung befindet. Dabei ist die Sensor-Vorrichtung 4 oberhalb einer Straße 26 angeordnet, von der ein Soll-Erfassungsbereich 6 erfasst wird. Im elektronischen Datenspeicher der Sensor-Vorrichtung 4 ist als zusätzliche Information über den zu überwachenden Teil des Verkehrsweges eine Erwartungs-Trajektorie 16 enthalten. Diese ist im gezeigten Ausführungsbeispiel parallel zur Straße 26 nach oben verschoben, und trägt somit der durchschnittlichen Höhe eines erwarteten Verkehrsteilnehmers Rechnung. Da in Figur 3a diese Sensor-Vorrichtung 4 in der Soll-Position und der Soll-Orientierung perfekt angeordnet ist, deckt sich diese Erwartungs-Trajektorie 16 mit einer Ist-Trajektorie, die in Figur 3a nicht dargestellt ist.

Figur 3b zeigt die Situation, in der die Sensor-Vorrichtung 4 zwar in der SollPosition, nicht jedoch in der Soll-Orientierung angeordnet ist. Anders als bei den in den Figuren 1 und 2 dargestellten Situationen liegt in, Figur 3b jedoch eine Abweichung im Elevationswinkel vor. Während in Figur 3a ein Soll-Elevationswinkel 28 dargestellt ist, der gegen eine Horizontale 30 gemessen wird, zeigt Figur 3b eine Situation, in der gegen die Horizontale 30 ein Ist-Elevationswinkel 32 vorliegt, der größer als der Soll-Elevationswinkel 28 ist.

Dies führt einerseits dazu, dass der Ist-Erfassungsbereich 12 gegenüber dem Soll-Erfassungsbereich 6 nicht nur verschoben, sondern auch verkleinert worden ist. Zudem verläuft die als Zusatzinformation zu dem zu überwachenden Teil des Verkehrsweges gespeicherte Erwartungs-Trajektorie 16 nicht mehr parallel zur Straße 26, so dass sich ein Verkehrsteilnehmer, der sich entlang der Ist-Trajektorie 24 parallel zur Straße 26 bewegt, nicht der Erwartungs-Trajektorie 16 folgt. Vielmehr schließen die Erwartungs-Trajektorie 16 und die Ist-Trajektorie 24 einen Winkel ein, der in einer xz-Ebene, mithin also in einer senkrecht zur Strasse 26 stehenden Ebene, liegt und genau der Abweichung zwischen dem Soll-Elevationswinkel 28 und dem Ist-Elevationswinkel 32 entspricht. Auf diese Weise lässt sich folglich aus der Kenntnis des Soll-Elevationswinkel 28 und dieser wie soeben dargelegt bestimmten Abweichung der Ist-Elevationswinkel bestimmen. Dies geschieht durch die elektrische Steuerung, die beispielsweise auf einer Ausgabeeinrichtung eine angemessene Korrektur der Ist-Orientierung der Sensorvorrichtung 4 vorschlägt.

### Bezugszeichenliste

- 2: Kreuzung
- 4: Sensorvorrichtung
- 6: Soll-Erfassungsbereich
- 8: Soll-Azimutwinkel
- 10: Nordrichtung
- 12: Ist-Erfassungsbereich
- 14: Ist-Azimutwinkel
- 16, 16': Erwartungs-Trajektorie
- 18, 18': Erwartungs-Eintrittspunkt
- 20, 20': Fahrspur-Trajektorie
- 22: Ist-Eintrittspunkt
- 24: Ist-Trajektorie
- 26: Straße
- 28: Soll-Elevationswinkel
- 30: Horizontale
- 32: Ist-Elevationswinkel

## Patentansprüche

1. Sensorvorrichtung (4) zum Positionieren über oder neben einem Verkehrsweg, die eingerichtet ist, Verkehrsteilnehmer auf einem Teil eines Verkehrsweges zu erfassen, wobei die Sensorvorrichtung (4) eine Sende- und/oder Empfangseinrichtung zum Aussenden und/oder Empfangen einer Sendestrahlung,
wenigstens eine Bestimmungseinrichtung zum Bestimmen einer Ist-Orientierung, in der die Sensorvorrichtung (4) angeordnet ist, und
eine elektrische Steuerung aufweist, die eingerichtet ist, die Ist-Position mit einer Soll-Position und/oder die Ist-Orientierung mit einer Soll-Orientierung zu vergleichen und die Soll-Orientierung einen Soll-Elevationswinkel (28) und einen Soll-Azimutwinkel (8) beinhaltet und die wenigstens eine Bestimmungseinrichtung eingerichtet ist, einen Ist-Elevationswinkel (32) und/oder einen Ist-Azimutwinkel (14) und/oder einen Ist-Verkippungswinkel zu bestimmen **dadurch gekennzeichnet, dass** in einem elektronischen Datenspeicher Informationen über verschiedene Teilbereiche, insbesondere Fahrspuren, des Teils des Verkehrsweges oder Erwartungs-Trajektorien (16, 16') gespeichert sind, von denen erwartet wird, dass sich zumindest ein Teil der Verkehrsteilnehmer entlang dieser Erwartungs-Trajektorien (16, 16') bewegt und dass die elektrische Steuerung eingerichtet ist, aus Daten von mehrfach zu unterschiedlichen Zeitpunkten erfassten Verkehrsteilnehmern eine Ist-Trajektorie (24) zu bestimmen, diese mit den Erwartungs-Trajektorien (16, 16') oder mit den Informationen über verschiedene Teilbereiche, insbesondere Fahrspuren, des Teils des Verkehrsweges zu vergleichen und aus einem Ergebnis dieses Vergleiches eine Abweichung des Ist-Elevationswinkels (32) vom Soll-Elevationswinkel (28) und/oder eine Abweichung des Ist-Azimutwinkels (14) vom Soll-Azimutwinkel (8) zu bestimmen.

2. Sensorvorrichtung (4) nach Anspruch 1, **dadurch gekennzeichnet, dass** die wenigstens eine Bestimmungseinrichtung ein GPS-Modul zum Bestimmen einer Ist-Position aufweist.

3. Sensorvorrichtung (4) nach Anspruch 1 oder 2, **dadurch gekennzeichnet, dass** die Sensoreinrichtung (4) eine Bereitstellungseinrichtung aufweist, um die Ist-Position und/oder die Ist-Orientierung für eine weitere Verarbeitung bereitzustellen.

4. Sensorvorrichtung (4) nach einem der vorstehenden Ansprüche, **dadurch gekennzeichnet, dass** die elektrische Steuerung eingerichtet ist, die Soll-Position und/oder die Soll-Orientierung einem elektronischen Datenspeicher zu entnehmen.

5. Sensorvorrichtung (4) nach Anspruch 4, **dadurch gekennzeichnet, dass** der elektronische Datenspeicher Teil der Sensorvorrichtung (4) ist.

6. Sensorvorrichtung (4) nach einem der vorstehenden Ansprüche, **dadurch gekennzeichnet, dass** die wenigstens eine Bestimmungseinrichtung einen Kompass und/oder ein Magnetometer zum Bestimmen des Ist-Azimutwinkels (14) aufweist.

7. Sensorvorrichtung (4) nach einem der vorstehenden Ansprüche, **dadurch gekennzeichnet, dass** die elektrische Steuerung eingerichtet ist, eine Abweichung der Ist-Position von der Soll-Position und/oder eine Abweichung der Ist-Orientierung von der Soll-Orientierung an eine Ausgabeeinrichtung, insbesondere ein Display, auszugeben.

8. Sensorvorrichtung (4) nach einem der vorstehenden Ansprüche, **dadurch gekennzeichnet, dass** die Sensorvorrichtung (4) wenigstens einen Beschleunigungssensor aufweist, mit dem eine Beschleunigung der Sensorvorrichtung (4) in wenigstens eine Raumrichtung, vorzugsweise in zwei oder drei voneinander unabhängigen Raumrichtungen, messbar ist.

## Claims

1. A sensor device (4) being adapted to be positioned above or next to a traffic route that is configured to detect road users on a part of a traffic route, wherein the sensor device (4) comprises a transmitting and/or receiving device for transmitting and/or receiving a transmission beam,
at least one determination device for determining an actual orientation in which the sensor device (4) is disposed and an electrical controller that is configured to compare the actual position with a target position and/or the actual orientation with a target orientation wherein the target orientation consists of a target elevation angle (28) and a target azimuth angle (8) and the at least one determination device is configured to determine an actual elevation angle (32) and/or an actual azimuth angle (14) and/or an actual tilt angle, **characterized in that** information about different sub regions, in particular lanes, of the part of the traffic route or expected trajectories (16, 16') is stored in an electronic data memory, of which it is expected that at least some of the road users travel along said expected trajectories (16, 16') and **in that** the electrical controller is configured to determine an actual trajectory (24) from the data of a plurality of road users detected at different points in time, to compare said actual trajectory (24) with the expected trajectories (16, 16') or with the information about different sub regions, in particular vehicle lanes, of the part of the traffic route and to determine a deviation of the actual elevation angle (32) from the target elevation angle (28) and/or a deviation of the actual, azimuth angle (14) from the target azimuth angle (8) from the result of said comparison.

2. The sensor device (4) as claimed in claim 1, **characterized in that** the at least one determination device comprises a GPS module for determining the actual position.

3. The sensor device (4) as claimed in claim 1 or 2, **characterized in that** the sensor device (4) comprises a provision device for providing the actual position and/or the actual orientation for further processing.

4. The sensor device (4) as claimed in any one of the preceding claims, **characterized in that** the electrical controller is configured to obtain the target position and/or the target orientation from the electronic data memory.

5. The sensor device (4) as claimed in claim 4, **characterized in that** the electronic data memory is part of the sensor device (4).

6. The sensor device (4) as claimed in any one of the preceding claims, **characterized in that** the at least one determination device comprises a compass and/or a magnetometer for determining the actual azimuth angle (14).

7. The sensor device (4) as claimed in any one of the preceding claims, **characterized in that** the electrical controller is configured to output a deviation of the actual position from the target position and/or a deviation of the actual orientation from the target orientation to an output device, in particular a display.

8. The sensor device (4) as claimed in any one of the preceding claims, **characterized in that** the sensor device (4) comprises at least one acceleration sensor, with which an acceleration of the sensor device (4) can be measured in at least one spatial direction, preferably in two or three mutually independent spatial directions.

## Revendications

1. Dispositif de détection (4) destiné à être positionné au-dessus ou à côté d'une voie de circulation, qui est aménagé pour détecter des usagers de la route sur une partie d'une voie de circulation, le dispositif de détection (4) présentant un dispositif d'émission et/ou de réception pour émettre et/ou recevoir un rayonnement d'émission, au moins un dispositif de détermination pour déterminer une orientation réelle dans laquelle le dispositif de détection (4) est agencé, et une commande électrique qui est aménagée pour comparer la position réelle avec une position de consigne et/ou l'orientation réelle avec une orientation de consigne et dans lequel l'orientation de consigne contient un angle d'élévation de consigne (28) et un angle azimutal de consigne (8) et ledit au moins un dispositif de détermination est aménagé pour déterminer un angle d'élévation réel (32) et/ou un angle azimutal réel (14) et/ou un angle de basculement réel, **caractérisé en ce que** dans une mémoire de données électronique sont mémorisées des informations sur différentes zones partielles, en particulier des files de la partie de la voie de circulation ou de trajectoires attendues (16, 16'), pour lesquelles on s'attend à ce qu'au moins une partie des usagers de la route se déplacent le long de ces trajectoires attendues (16, 16') et **en ce que** la commande électrique est aménagée pour déterminer, à partir de données d'usagers de la route détectés plusieurs fois à des moments différents, une trajectoire réelle (24), pour la comparer avec les trajectoires attendues (16, 16') ou avec les informations sur différentes zones partielles, en particulier les files d'une partie de la voie de circulation et pour déterminer à partir d'un résultat de cette comparaison, une déviation de l'angle d'élévation réel (32) vis-à-vis de l'angle d'élévation de consigne (28) et/ou une déviation de l'angle azimutal réel (14) vis-à-vis de l'angle azimutal de consigne (8).

2. Dispositif de détection (4) selon la revendication 1, **caractérisé en ce que** ledit au moins un dispositif de détermination présente un module GPS pour déterminer une position réelle.

3. Dispositif de détection (4) selon la revendication 1 ou 2, **caractérisé en ce que** le dispositif de détection présente un dispositif de mise à disposition pour mettre à disposition la position réelle et/ou l'orientation réelle pour un traitement ultérieur.

4. Dispositif de détection (4) selon l'une des revendications précédentes, **caractérisé en ce que** la commande électrique est aménagée pour prélever la position de consigne et/ou l'orientation de consigne depuis une mémoire de données électronique.

5. Dispositif de détection (4) selon la revendication 4, **caractérisé en ce que** la mémoire de données électronique fait partie du dispositif de détection (4).

6. Dispositif de détection (4) selon l'une des revendications précédentes, **caractérisé en ce que** ledit au moins un dispositif de détermination présente une boussole et/ou un magnétomètre pour déterminer l'angle azimutal réel (14).

7. Dispositif de détection (4) selon l'une des revendications précédentes, **caractérisé en ce que** la commande électrique est aménagée pour fournir à un moyen de sortie, en particulier à un écran d'affichage une déviation de la position réelle vis-à-vis. de la position de consigne et/ou une déviation de l'orientation réelle vis-à-vis de l'orientation de consigne.

8. Dispositif de détection (4) selon l'une des revendications précédentes, **caractérisé en ce que** le dispositif de détection (4) présente au moins un détecteur d'accélération avec lequel on peut mesurer une accélération du dispositif de détection (4) dans au moins une direction spatiale, de préférence dans deux ou trois directions spatiales indépendantes les unes des autres.
